# EUROPEAN PATENT SPECIFICATION

(11) **EP 3 602 904 B1**
(45) Date of publication and mention of the grant of the patent: **28.07.2021**
(21) Application number: 17825987.5
(22) Date of filing: 22.12.2017
(51) Int. Cl.: H04L 5/00, H04W 72/04, H04W 72/12

(54) **EXTENDED SCHEDULING REQUEST (SR) FOR ENHANCED SCHEDULING INFORMATION INDICATION**
ERWEITERTE PLANUNGSANFRAGE (SR) FÜR VERBESSERTE PLANUNGSINFORMATIONSANZEIGE
DEMANDE DE PLANIFICATION ÉTENDUE (SR) DESTINÉE À UNE INDICATION D'INFORMATIONS DE PLANIFICATION AMÉLIORÉE

(30) Priority: 24.03.2017 US 201762476291 P
(43) Date of publication of application: 05.02.2020
(73) Proprietor: Telefonaktiebolaget LM Ericsson (publ), 164 83 Stockholm (SE)
(72) Inventor: WANG, Min, 977 53 Luleå (SE); CHRISTOFFERSSON, Jan, 975 61 Luleå (SE); FOLKE, Mats, 16243 Vällingby (SE); ENBUSKE, Henrik, 113 41 Stockholm (SE)
(74) Representative: Ericsson
(86) International application number: PCT/SE2017/051345
(87) International publication number: WO 2018/174765

(56) References cited:
- US-A1- 2014 204 800
- SAMSUNG ELECTRONICS R&D INSTITUTE UK: "Multiple numerology considerations for SR", 3GPP DRAFT; R2-1701619 MULTIPLE NUMEROLOGY CONSIDERATIONS FOR SR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Athens, Greece; 20170213 - 20170217 12 February 2017 (2017-02-12), XP051212213, Retrieved from the Internet: URL:http://www.3gpp.org/ftp/Meetings_3GPP_ SYNC/RAN2/Docs/ [retrieved on 2017-02-12]
- INTEL CORPORATION: "Uplink URLLC Transmission Based on Scheduling Request and Grant", 3GPP DRAFT; R1-1700376 INTEL - UL SR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207913, Retrieved from the Internet: URL:http://www.3gpp.org/ftp/Meetings_3GPP_ SYNC/RAN1/Docs/ [retrieved on 2017-01-16]
- OPPO: "Discussion on scheduling enhancement", 3GPP DRAFT; R2-1700960-DISCUSSION ON SCHEDULING ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051211726, Retrieved from the Internet: URL:http://www.3gpp.org/ftp/Meetings_3GPP_ SYNC/RAN2/Docs/ [retrieved on 2017-02-12]

## Description

### Related Applications

This application claims the benefit of provisional patent application serial number 62/476,291, filed March 24, 2017.

### Technical Field

This application relates generally to uplink scheduling requests, and more particularly to extending conventional scheduling requests such that they provide additional information to the recipient of the scheduling requests, wherein the additional information is linked to a predefined mapping which could be changed to a different mapping in response to detecting a trigger condition related to the network load or network traffic.

### Background

New Radio (NR) can be operated from below 1 Gigahertz (GHz) to around 100 GHz and the carrier bandwidth can be various in a large range, for instance, 10 Megahertz (MHz) to 1 GHz. The Third Generation Partnership Project (3GPP) has agreed to use Long Term Evolution (LTE) as baseline for uplink scheduling in NR. One important aspect of uplink scheduling is the Scheduling Request (SR).

### LTE

LTE wireless communication technology uses Orthogonal Frequency Division Multiplexing (OFDM) in the downlink and Discrete Fourier Transform (DFT)-spread OFDM in the uplink.

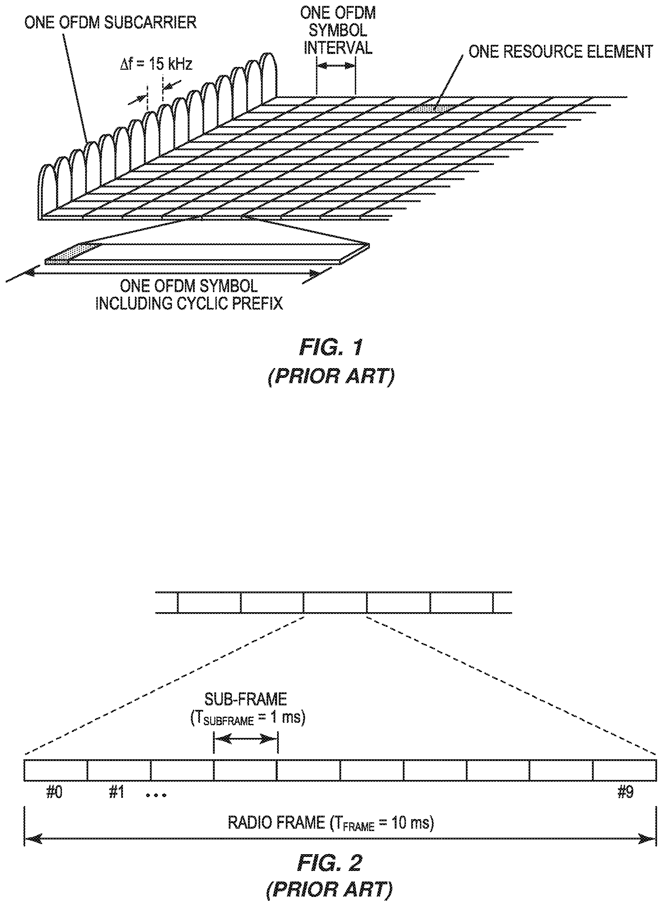

Figure 1 illustrates a basic LTE downlink physical resource, which can be seen as a time-frequency grid, where each Resource Element (RE) corresponds to one OFDM subcarrier during one OFDM symbol interval. Each RE contains one OFDM symbol including a cyclic prefix. In the embodiment illustrated in Figure 1, the subcarrier spacing is 15 kilohertz (kHz).

Figure 2 illustrates an LTE downlink radio frame. In the time domain, LTE downlink transmissions are organized into radio frames of ten milliseconds (ms), each radio frame consisting of ten equally-sized subframes of length TSUBFRAME = 1 ms, as illustrated in Figure 2.

Furthermore, resource allocation in LTE is typically described in terms of Resource Blocks (RBs), where a RB corresponds to one slot (0.5 ms) in the time domain and 12 contiguous subcarriers in the frequency domain. A pair of two adjacent RBs in time direction (1.0 ms) is known as a RB pair. RBs are numbered in the frequency domain, starting with 0 from one end of the system bandwidth.

The notion of Virtual RBs (VRBs) and Physical RBs (PRBs) has been introduced in LTE. The actual resource allocation to a User Equipment device (UE) is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain, thereby providing frequency diversity for a data channel transmitted using these distributed VRBs.

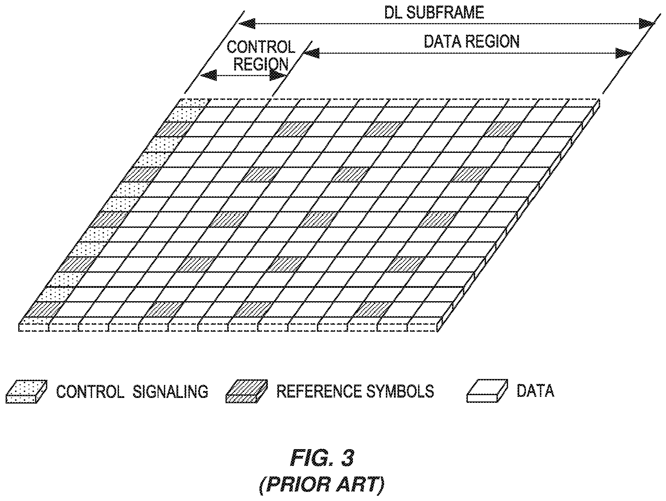

Figure 3 illustrates an LTE downlink (DL) subframe. Downlink transmissions are dynamically scheduled. Specifically, in each DL subframe, the base station transmits downlink control information that indicates the UEs to which data is transmitted in the current subframe and upon which RBs the data is transmitted to those UEs in the current downlink subframe. This control signaling is typically transmitted in a portion of the DL subframe known as the control region, which occupies the first 1, 2, 3, or 4 OFDM symbols in each subframe, and the number n = 1, 2, 3, or 4 is known as the Control Format Indicator (CFI). The portion of the DL subframe that is not the control region is known as the data region. Both the control region and the data region of the downlink subframe also contain common reference symbols, which are known to the receiver and used for coherent demodulation of, e.g., the control information. The LTE downlink subframe illustrated in Figure 3 has CFI = 3, meaning that the control region occupies the first three OFDM symbols, and the remaining eleven OFDM symbols in the DL subframe comprise the data region. From LTE Release (Rel) 11 onwards, the above described resource assignments can also be scheduled on the Enhanced Physical Downlink Control Channel (EPDCCH). For Rel 8 to Rel 10, only the Physical Downlink Control Channel (PDCCH) is available.

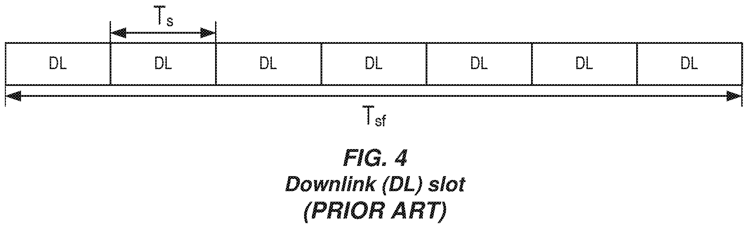

Figure 4 shows a downlink-only slot as an example with seven OFDM symbols, each symbol labeled with "DL" to indicate that it is a downlink transmission. In Figure 4, Tsf and Ts denote the slot and OFDM symbol duration, respectively.

### Scheduling Principles in LTE

In LTE, scheduling is modeled in the Medium Access Control (MAC) layer and resides in the Evolved or Enhanced Node B (eNB). The scheduler assigns radio resources, also called RBs, for the downlink (assignments) as well as for the uplink (grants) using the PDCCH.

For uplink scheduling, the eNB needs information about the current state of the buffers in the terminal, i.e., if and how much data the terminal has in its priority queues. This information is sent from the UE to the eNB either as a 1-bit SR or by a Buffer Status Report (BSR). BSRs are transmitted on the data channel (PUSCH) mostly together with user data. SRs are either transmitted on the Random Access Channel (RACH) Scheduling Request (RA-SR) or on dedicated resources on the Physical Uplink control Channel (PUCCH) (Dedicated SR (D-SR)) if such resources are available. The PUCCH resources for dedicated SR are assigned and revoked by the eNB through Radio Recourse Control (RRC). In addition, the resources are autonomously revoked when the UE loses uplink synchronization.

Precise and up-to-date scheduling information allows more accurate scheduling decisions, and can help to optimize the use of radio resources and to improve capacity. However, the accuracy of the information provided by the UE is limited by the granularity of the BSR, by the frequency of the SR and BSR transmissions and by the delay between the reception of the SR or BSR and the scheduling decision.

For delay sensitive services with periodical packet arrival, such as Voice Over Internet Protocol (VoIP), the likelihood that the buffer status information is outdated when it is used is high. It is likely that additional data has arrived since the BSR was transmitted. It is also likely that the buffer will be emptied frequently and therefore the only available information will be a one bit SR. With only a 1-bit indication from the UE, it is impossible for a conventional eNB to know what kind of data that has arrived in the UEs buffer. This means further that the eNB scheduler might not be able to prioritize important data (such as handover signaling messages) even though this data is associated with a Quality of Service (QoS) Class Identifier (QCI) of high priority.

With incorrect uplink information, the scheduler is furthermore likely to provide either a too large grant (which then result in the UE transmitting padding and may reduce system capacity) or a too small grant (which may lead to Radio Link Control (RLC) segmentation and an increase in transmission delay).

### BSR and SR Framework in LTE

Buffer Status Reporting (BSR) is used by the UE to report to the eNB the amount of data stored in its buffers for transmission. The eNB uses these reports to allocate resources to the UE, and to prioritize resource allocation between different UEs.

The UE triggers a regular BSR when uplink data becomes available for transmission and this data belongs to a Logical Channel (LCH) Group (LCG) (or radio bearer group) with higher priority than those for which data already existed in the buffer or if the UE buffers were empty just before this new data became available for transmission. If no uplink grant is available, a SR transmission will be triggered. An SR is either sent on the RACH (an RA-SR) or on a dedicated resource on PUCCH (a D-SR). A D-SR is typically used when the UE uplink is time synchronized. The purpose is to enable UE to rapidly request resources for uplink data transmission. The RA-SR is used when the UE has lost uplink synchronization or if it has no D-SR resources.

### Problems with Existing Solutions

Under current standards, SR is a single bit that indicates only that the UE has data to transmit, and that does not provide other information that may be useful for a New Radio Base Station (gNB) to make informed grant decisions, such as how much information the UE has to transmit, the priority level of that data, and so on. Such information would be useful for the scheduler to achieve an accurate and timely scheduling for each UE so that User Plane (UP) latency could be reduced.

R2-1701619, Samsung Electronics R&D Institute UK, "Multiple numerology considerations for SR" discloses suggestions for enhancing the UL scheduling in NR, e.g. that the SR indicate more things about the BRS itself.

R2-1700960, OPPO, "Discussion on scheduling enhancement" discloses different proposals for enhancements in NR regarding uplink scheduling for better supporting different use cases.

R1-1700376, Intel Corporation, "Uplink URLLC Transmission Based on Scheduling Request and Grant" discloses that SR may carry additional information about traffic/service attributes.

US 2014/0204800 A1 discloses that the SR itself may comprise some additional information, e.g. regarding buffer status.

### Summary

Methods and systems for extended Scheduling Requests (SRs) that convey additional information, such as a priority indication, for example, are provided herein. By extending the conventional SR as described herein, the UE has a possibility to indicate more information such as, but not limited to, (a) an indication that a User Equipment (UE) has data to transmit; (b) a buffer size for one or more Logical Channels (LCH) or Logical Channel Groups (LCGs); (c) a priority indication for the data and/or for each LCH or LCG; (d) an indication of a set of the associated numerologies and/or Transmit Time Interval (TTI) durations for each LCH or LCG; (e) other information; and (f) combinations of the above. As will be described in more detail below, the additional information may be conveyed via the time and/or frequency resources used for a single bit SR, via the use of additional bits for the SR, or a combination of the above. An SR that conveys not only the availability of data but also additional scheduling information is referred to herein as an Enhanced Scheduling Request (ESR). It may also be referred to herein as an extended SR. Thus, both the information that is being conveyed by the ESR ("the information") and the manner in which that information is being conveyed ("the information format"), although related, may be controlled independently. For example, an ESR may additionally convey a priority indication, which is a decision about the information content. The additional information may be conveyed via the use or additional SR bits, or, alternatively, via the location of the SR within the LTE resources, which is a decision about the information format.

In addition, the present disclosure presents a solution to control or decide what information that a UE shall report via extended SR. The solution supports a dynamic change of the information format (e.g., the location and/or the number of bits of the SR, as well as their respective meanings) from time to time for the same UE. In one embodiment, the network controls the information format that a UE shall report via ESR. In one embodiment this decision may be made considering information such as the system load, the UE category and UE capabilities, the LCHs and/or radio bearers that the UE is connected, the network deployment, etc. In one embodiment, the controlling configuration may be UE-specific. In other words, different UEs may report and/or indicate different information via ESR. In one embodiment, the information format that a UE should indicate via extended SR can be defined in a table.

### Advantages of the Proposed Solution

By knowing the type and/or priority of the LCH, a New Radio Base Station (gNB) can provide grants for the traffic that should be scheduled. This enables a more correct priority handling. This is beneficial for Radio Recourse Control (RRC) signaling or Ultra-Reliable and Low Latency Communication (URLLC) data which could get resources with higher priority than other LCHs. In one embodiment, the scheduler can collect more accurate and timely information from each UE via SR signaling. Having this information enables the following improvements:
- Signaling resource bearers or LCHs with higher priority can be scheduled first, to reduce the handover failures or the probability that a resource bearer may be dropped;
- User Plane (UP) latency can be reduced for LCHs with critical latency requirements;
- Resource efficiency can be improved by allowing the network to assign the resources to right users; and
- Numerology specific resources may be configure and/or allocated for use by an LCH.

The invention is set out in the appended set of claims.

### Brief Description of the Drawings

The accompanying drawing figures incorporated in and forming a part of this specification illustrate several aspects of the disclosure, and together with the description serve to explain the principles of the disclosure.
Figure 1 illustrates the basic Long Term Evolution (LTE) physical resource;
Figure 2 illustrates a conventional LTE downlink radio frame;
Figure 3 illustrates an example of a downlink subframe;
Figure 4 shows a downlink-only slot as an example with seven Orthogonal Frequency Division Multiplexing (OFDM) symbols;
Figure 5 illustrates one example of a wireless communication system in which embodiments of the present disclosure may be implemented;
Figures 6 and 7 are flow charts that illustrate the operation of a New Radio Base Station (gNB) or other network node according to some embodiments of the present disclosure;
Figures 8 and 9 are flow charts that illustrate the operation of a User Equipment device (UE) or other wireless device according to some embodiments of the present disclosure;
Figures 10 and 11 illustrate example embodiments of a UE or other type of wireless device; and
Figures 12 through 14 illustrate example embodiments of a network node.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network. Some examples of a core network node include, e.g., a Mobility Management Entity (MME), a Packet Data Network Gateway (P-GW), a Service Capability Exposure Function (SCEF), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network and/or system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

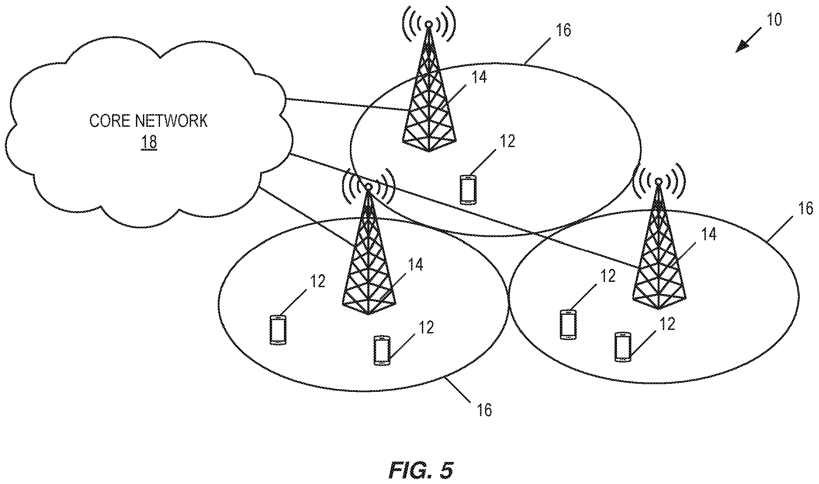

Figure 5 illustrates one example of a wireless communication system 10 in which embodiments of the present disclosure may be implemented. The wireless communication system 10 may be a cellular communications system such as, for example, an LTE network or a 5G NR network. As illustrated, in this example, the wireless communication system 10 includes a plurality of wireless communication devices 12 (e.g., conventional UEs, MTC and/or Machine-to-Machine (M2M) UEs) and a plurality of radio access nodes 14 (e.g., eNBs, 5G base stations which are referred to as gNBs, or other base stations). The wireless communication system 10 is organized into cells 16, which are connected to a core network 18 via the corresponding radio access nodes 14. The radio access nodes 14 are capable of communicating with the wireless communication devices 12 (also referred to herein as wireless devices 12) along with any additional elements suitable to support communication between wireless communication devices or between a wireless communication device and another communication device (such as a landline telephone).

### Extending Scheduling Request (SR) via additional bits

Methods and systems for extended SRs for enhanced scheduling information indication are provided herein. By extending the number of bits for SR, the UE has a possibility to indicate more information such as, but not limited to, (a) an indication that a UE has data to transmit; (b) a buffer size for one or more Logical Channels (LCH) or Logical Channel Groups (LCGs); (c) a priority indication for the data and/or for each LCH or LCG; (d) an indication of a set of the associated numerologies and/or Transmit Time Interval (TTI) durations for each LCH or LCG; (e) other information; and (f) combinations of the above.

The above information is important for the scheduler to achieve an accurate and timely scheduling for each UE, so that the User Plane (UP) latency can be reduced. Although extended SR is described herein in the context of NR, it will be understood that the same concept may be applied to other radio technologies.

The above information may be conveyed via the time and/or frequency resources used for a single bit SR, via the use of additional bits for the SR, or a combination of the above. An SR that conveys not only the availability of data but also additional scheduling information is referred to herein as an Enhanced Scheduling Request (ESR). It may also be referred to herein as an extended SR. Thus, both the information that is being conveyed by the ESR ("the information") and the manner in which that information is being conveyed ("the information format"), although related, may be controlled independently. For example, an ESR may additionally convey a priority indication, which is a decision about the information content. The additional information may be conveyed via the use or additional SR bits, via the location of the SR within the LTE resources, or a combination of the above, which is a decision about the information format.

The number of bits that an extended SR will contain may be chosen based on the tradeoff between the increased Layer 1 (L1) control channel issues (overhead, design complexity, etc.) and the possible achieved gain in terms of UP latency reduction and efficiency. In one embodiment, Enhanced SR (ESR) without Hybrid Automatic Repeat Request (HARQ) acknowledgement could be relatively easily generalized to support 2 bits with the modulation and coding scheme Quadrature Phase Shift Keying (QPSK). In other embodiments, the extension of more than 2 bits would require more complex changes compared to LTE.

The examples of multi-bit ESR presented herein assume that the SR is extended to support 2 bits, but the subject matter disclosed herein contemplates SRs having any number of bits.

### Dynamic mapping of ESR bits

In addition, it is recognized that not all UEs in a network may want or need to convey the same kind of information. For example, for MTC devices it may be better to provide indication of the buffer size than priority. For other types of devices it may be useful to provide other information. The information provided by the UE (as well as the format in which that information is provided) may also depend on the UE category and capabilities. Having the ability to define or change how the extended SR bits from each UE should be interpreted by the gNB would allow a limited number of bits to convey a large number of different types of information.

Currently, there is no mechanism to control when and how UE shall choose what information to indicate using the extended bits in the ESR. Furthermore, the need for a UE to report and/or indicate what information may vary from time to time. For example, at one time, it may be sufficient for a UE to indicate the priority levels of the associated LCHs that have data. At another time, the situation may change so that it is beneficial for that UE to indicate the size of the data buffers for certain LCH.

Therefore, the present disclosure presents a solution to control and/or decide what information that a UE shall report via extended SR. The solution supports a dynamic change of the information format from time to time for the same UE. In one embodiment, the network controls the information format that a UE shall report via ESR. In one embodiment this decision may be made considering information such as the system load, the UE category and UE capabilities, the LCHs and/or radio bearers that the UE is connected, the network deployment, etc. In one embodiment, the controlling configuration may be UE-specific. In other words, different UEs may report and/or indicate different information via ESR.

In some embodiments, the ESR comprises a plurality of bits, and the additional scheduling information is mapped to the plurality of bits according to a predefined mapping, which the UE uses to map the additional scheduling information to the bits of the ESR, and which the network node uses to map the bits of the ESR to the additional scheduling information. In one embodiment, the predefined mapping may be defined in a mapping table.

Assuming SR can be extended to 2 bits, a first example of the ESR signaling content is shown in the Table 1:

**Table 1**

| **Priority level** | bit 1 | bit 2 |
|---|---|---|
| Priority level 1 | 1 | 1 |
| Priority level 2 | 1 | 0 |
| Priority level 3 | 0 | 1 |
| Priority level 4 | 0 | 0 |

The network configures the mapping between priority levels and LCHs. It can be cell-specific or UE-specific. The UE may be configured with more than four LCHs at the same time. In this case, there may be more than one LCHs mapped to the same priority level.

The priority levels (or the bit patterns that correspond to the respective priority levels) used for the ESR may also be associated with configured LCGs, for where the related characteristics may not only relate to priority but also numerology and/or TTI.

If it is assumed that a UE is configured with four LCHs, carrying Signaling Radio Bearer (SRB) and/or handover signaling, Voice Over Internet Protocol (VoIP), video streaming, and File Transfer Protocol (FTP) separately. This UE can be configured as in the second example, shown in Table 2:

**Table 2**

| **Priority level** | bit 1 | bit 2 |
|---|---|---|
| SRB and/or handover signaling | 1 | 1 |
| VoIP | 1 | 0 |
| Video streaming | 0 | 1 |
| FTP file download | 0 | 0 |

For other UEs, the configuration may be different, such as in the third example, shown in Table 3:

**Table 3**

| **Priority level** | bit 1 | bit 2 |
|---|---|---|
| SRB and/or handover signaling + VoIP | 1 | 1 |
| Video Streaming | 1 | 0 |
| FTP file download | 0 | 1 |
| Chatty traffic | 0 | 0 |

In the fourth example, the network may require a UE to indicate both priority levels and data size, as shown in Table 4:

**Table 4**

| **Priority level** | bit 1 | bit 2 |
|---|---|---|
| SRB and/or handover signaling + VoIP | 1 | 1 |
| Video Streaming | 1 | 0 |
| FTP file download | 0 | 1 |
| Chatty traffic with small data size limitation may be up to X bytes | 0 | 0 |

In the fifth example, the network may require an MTC UE to indicate only the information about the data size, as shown in Table 5:

**Table 5**

| **Priority level** | bit 1 | bit 2 |
|---|---|---|
| Small data application with packet size up to A Bytes | 1 | 1 |
| Small data application with packet size between A and B Bytes | 1 | 0 |
| Small data application with packet size between B and C Bytes | 0 | 1 |
| Small data application with packet size above C Bytes | 0 | 0 |

As a final example, the network may configure the UE to use only a single bit ESR. In this case, the ESR only indicates that the UE has data to transmit. This may be an option for certain UE types or in some cases to reduce overhead in terms L1 resources.

### Extending SR via location and/or resource used

Alternatively, in some embodiments, a single bit ESR (or for more information, a multi-bit ESR) conveys availability of data, but where the ESR is located, e.g., which time and/or frequency resources are used for the ESR transmission (e.g., Physical Uplink Control Channel (PUCCH)), indicates other information, such as the LCH (or LCG) for which data is available, according to configured or otherwise set mapping. For example, in one embodiment, the resource used by a single bit SR may indicate the logical channel or logical channel group for which data is available.

In an alternative embodiment, the combination of the used resource(s) and the multiple bits indicate more information besides the information on the availability of data, such as the identification of an LCH or LCG, the priority of an LCH or LCG, the buffer size of an LCH or LCG, etc. For example, the resources used by a multi-bit SR may provide some information (e.g., to identify an LCH or LCG), and the bit values of the multi-bit SR may indicate other information (e.g., the information shown in Tables 1-5, above). In another example, the resources used may indicate priority while the bit values may identify the logical channel, and so on.

### Dynamic mapping of ESR locations

In some embodiments, time and/or frequency resources used to convey the availability of data and the additional scheduling information may be defined by a predefined mapping, which the UE uses to determine which time and/or frequency resources should be used to transmit the information and which the network node uses to map time and/or frequency resources to the availability of data and additional scheduling information. In some embodiments, the predefined mapping may be defined in a mapping table.

### Signaling Options

Several signaling options are clarified in this section. In embodiments where the information that a UE should indicate via a multi-bit ESR is defined in a table, signaling messages carrying the content such as the whole table or a table index could be exchanged between the network and a UE. The former alternative brings more signaling overhead. While the latter alternative can be applied when the tables are pre-stored by a UE. There could also be default lists specified in a standard, in which case no signaling would be needed, except to indicate which list is used.

### Signaling Option 1: Network Configured Tables via RRC Signaling

This is a semi-static option, which means that the network configures and/or updates tables when RRC connection is established, or a Data Radio Bearer (DRB) is established. The tables are only updated when it is necessary, for example, UE experiences a handover, or release of a DRB. The table could be also updated when Quality of Service (QoS) characteristics for certain services are changed.

### Signaling Option 2: Network Configured Table via Other L1andlor L2 Control Signaling

The network could signal UEs with the tables via Physical Downlink Control Channel (PDCCH) like control channel, or via other L2 messages, such as a Medium Access Control (MAC) Control Element (MAC-CE). This signaling option is more flexible and faster than RRC signaling.

### Signaling Option 3: UE Indicates its Preferred Table

This option is beneficial in cases when the network lacks the information of the exact UE buffers. For example, the initial packets for certain services arrive at the UE; however, the UE has not reported any ESR and/or BSR for those services yet. UE selects the most suitable table and indicates that table via uplink messages, for example a MAC-CE. The network can confirm or recommend another table via downlink messages.

### Possible Triggers for Table Updates

Transmission of the tables or table index or updates to the tables may be triggered, for example, if:
- The UE has new traffic or service. If for example if a chatty small data service (e.g., one that sporadically produces small data packets) is started, it could be useful to remove some priorities to instead indicate buffer levels;
- The network determines that certain traffic fails to meet certain requirements on QoS, e.g., latency requirements;
- The network determines that the system load is above or below a certain threshold possibly for a period of time, indicating that UEs may be at risk to not meet certain requirements on QoS, e.g., latency requirements for certain traffic;
- The UE has experienced a handover or has released a radio bearer; or
- The UE speed (or other capability of the UE) changes, which could make, e.g., handover signaling more important or less important.
This list of example triggers is intended to be illustrative and not limiting.

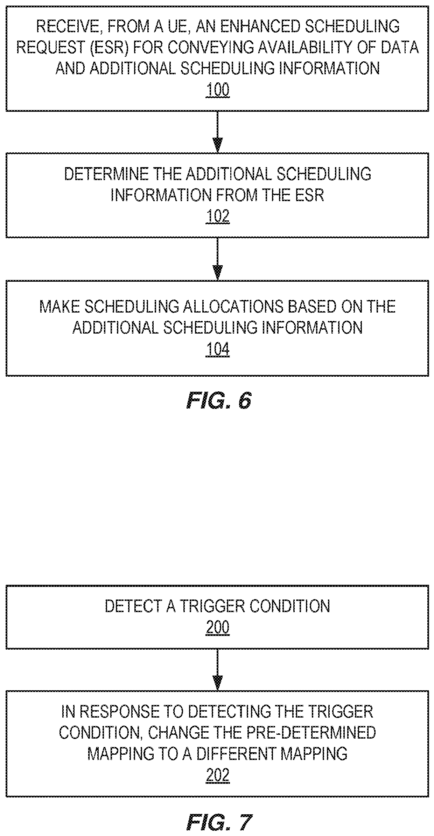

Figure 6 is a flow chart that illustrates the operation of a network node according to the invention. The network node may be, for example, a gNB. According to the invention as illustrated in Figure 6, the method includes receiving, from a UE, an ESR for conveying availability of data and additional scheduling information (step 100); determining the additional scheduling information from the ESR (step 102); and making scheduling allocations based on the additional scheduling information (step 104).

Figure 7 is a flow chart that illustrates the operation of a network node according to the invention. In Figure 7, the method includes detecting a trigger condition (step 200), and in response to detecting the trigger condition, changing the predefined mapping to a different mapping (step 202).

According to the invention, detecting the trigger condition includes, but is not limited to, determining that at least some network traffic fails to meet predefined requirements and determining that network load does not meet a predefined threshold.

Examples of changing the predefined mapping include, but are not limited to, sending to the UE information that identifies the different mapping, already provisioned in the UE, to be used; sending to the UE the different mapping to be used (e.g., a definition of a mapping, about which the UE does not already know). In some embodiments, changing the predefined mapping to a different mapping comprises using RRC or other Layer 3 (L3) signaling, using Media Access Control (MAC) or other Layer 2 (L2) signaling, or using Layer 1 (L1) signaling.

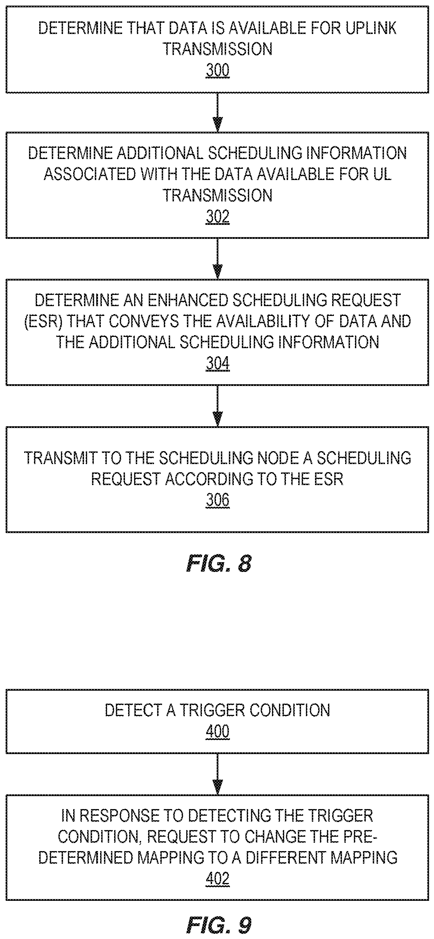

Figure 8 is a flow chart that illustrates the operation of a UE or other wireless device according to the invention. According to the invention as illustrated in Figure 8, the method includes determining that data is available for uplink (UL) transmission (step 300); determining additional scheduling information associated with the data available for uplink transmission (step 302); determining an ESR that conveys the availability of data and the additional scheduling information (step 304); and transmitting to a network node a scheduling request according to the ESR (step 306). In one embodiment, transmitting a scheduling request according to the ESR comprises transmitting a single-bit ESR in a time and/or frequency resource according to a predefined mapping that maps time and/or frequency resources to particular types and/or values of additional scheduling information that the UE wants to convey. In another embodiment, where multi-bit ESR is used, transmitting a scheduling request according to the ESR comprises transmitting multiple bits according to a predefined mapping that maps bit values to particular types and/or values of additional scheduling information that the UE wants to convey. In yet another embodiment, transmitting a scheduling request according to the ESR comprises a combination of both techniques, i.e., selecting bit values for a multi-bit ESR and selecting the location of the multi-bit ESR in a time and/or frequency grid such that the combination of bit values and time and/or frequency resources used convey the additional scheduling information. Examples of network nodes include, but are not limited to, gNBs, eNBs, base stations, etc.

Figure 9 is a flow chart that illustrates the operation of a UE or other wireless device according to another embodiment of the present disclosure. In the embodiment illustrated in Figure 9, the method includes detecting a trigger condition (step 400), and, in response to detecting the trigger condition, requesting to change the predefined mapping to a different mapping (step 402).

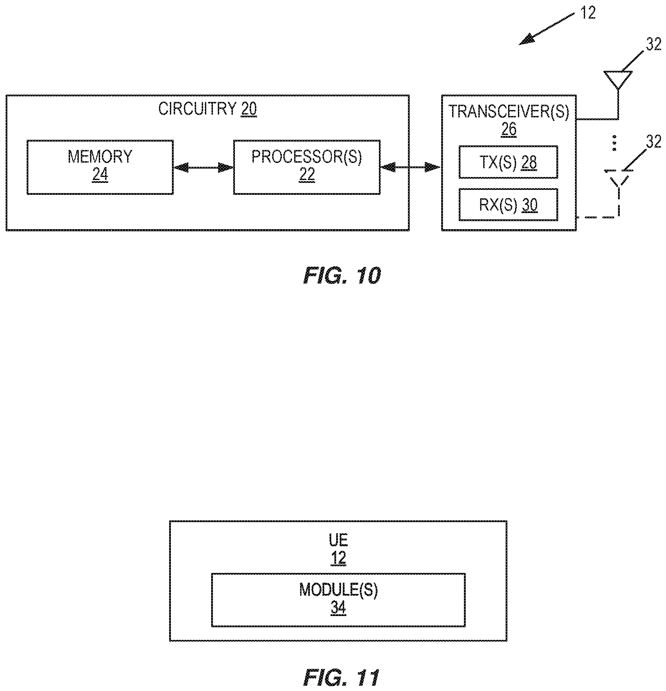

Figure 10 is a schematic block diagram of a UE according to some embodiments of the present disclosure. As illustrated, the wireless device 12 includes processing circuitry 20 comprising one or more processors 22 (e.g., Central Processing Units (CPUs), Application Specific Integrated Circuits (ASICs), Field Programmable Gate Arrays (FPGAs), Digital Signal Processors (DSPs), and/or the like) and memory 24. The UE 12 also includes one or more transceivers 26 each including one or more transmitters 28 and one or more receivers 30 coupled to one or more antennas 32. In some embodiments, the functionality of the wireless device 12 described above may be implemented in hardware (e.g., via hardware within the circuitry 20 and/or within the processor(s) 22) or be implemented in a combination of hardware and software (e.g., fully or partially implemented in software that is, e.g., stored in the memory 24 and executed by the processor(s) 22).

In some embodiments, a computer program including instructions which, when executed by the at least one processor 22, causes the at least one processor 22 to carry out at least some of the functionality of the wireless device 12 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 11 is a schematic block diagram of the wireless device 12 according to some other embodiments of the present disclosure. The UE 12 includes one or more modules 34, each of which is implemented in software. The module(s) 34 provide the functionality of the wireless device 12 described herein (e.g., with respect to Figures 6 and 9).

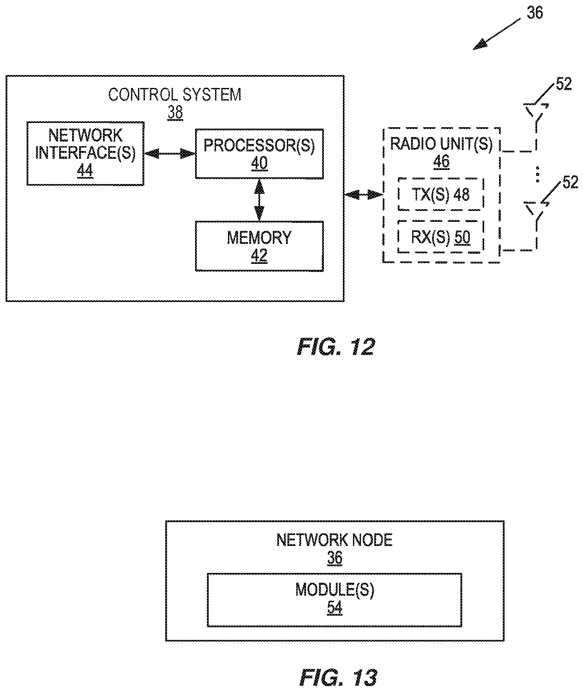

Figure 12 is a schematic block diagram of a network node 36 (e.g., a radio access node 14) according to some embodiments of the present disclosure. As illustrated, the network node 36 includes a control system 38 that includes circuitry comprising one or more processors 40 (e.g., CPUs, ASICs, DSPs, FPGAs, and/or the like) and memory 42. The control system 38 also includes a network interface 44. In embodiments in which the network node 36 is a radio access node 14, the network node 36 also includes one or more radio units 46 that each include one or more transmitters 48 and one or more receivers 50 coupled to one or more antennas 52. In some embodiments, the functionality of the radio access node 14 described above may be fully or partially implemented in software that is, e.g., stored in the memory 42 and executed by the processor(s) 40.

Figure 13 is a schematic block diagram of the network node 36 (which may be, e.g., the radio access node 14) according to some other embodiments of the present disclosure. The network node 36 includes one or more modules 54, each of which is implemented in software. The module(s) 54 provide the functionality of the network node 36 described herein.

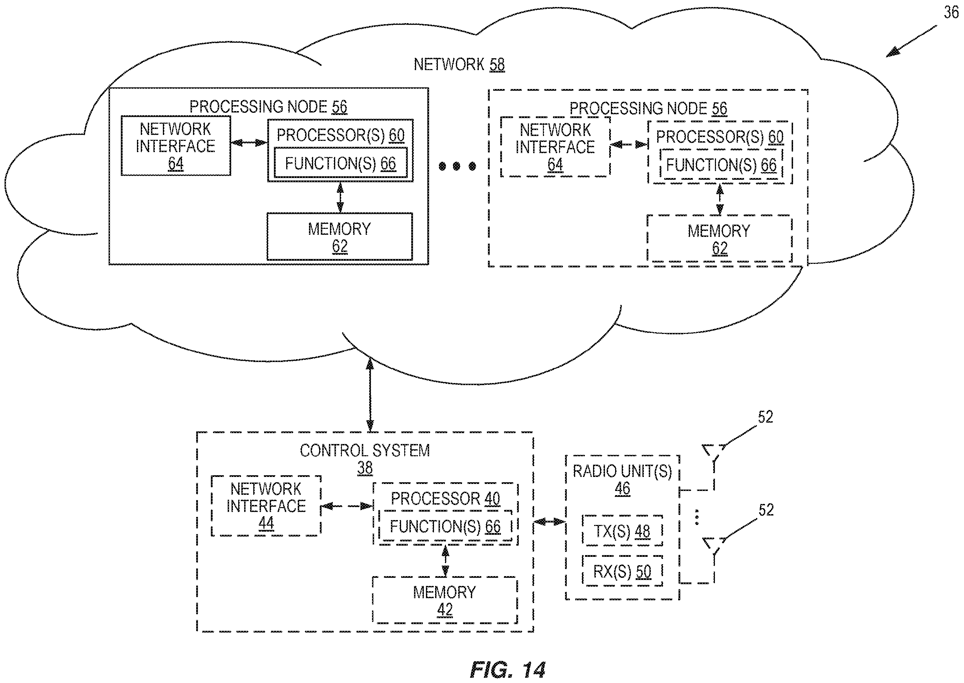

Figure 14 is a schematic block diagram that illustrates a virtualized embodiment of the network node 36 according to some embodiments of the present disclosure. As used herein, a "virtualized" network node is a network node in which at least a portion of the functionality of the network node 36 is implemented as a virtual component (e.g., via a virtual machine(s) executing on a physical processing node(s) in a network(s)). As illustrated, the network node 36 optionally includes the control system 38, as described with respect to Figure 12. In addition, if the network node 36 is a radio access node 14, the network node 36 also includes the one or more radio units 46, as described with respect to Figure 12. The control system 38 (if present) is connected to one or more processing nodes 56 coupled to or included as part of a network(s) 58 via the network interface 44. Alternatively, if the control system 38 is not present, the one or more radio units 46 (if present) are connected to the one or more processing nodes 56 via a network interface(s). Alternatively, all of the functionality of the network node 36 described herein may be implemented in the processing nodes 56 (i.e., the network node 36 does not include the control system 38 or the radio unit(s) 46). Each processing node 56 includes one or more processors 60 (e.g., CPUs, ASICs, DSPs, FPGAs, and/or the like), memory 62, and a network interface 64.

In this example, functions 66 of the radio access node 14 described herein are implemented at the one or more processing nodes 56 or distributed across the control system 38 (if present) and the one or more processing nodes 56 in any desired manner. In some particular embodiments, some or all of the functions 66 of the radio access node 14 described herein are implemented as virtual components executed by one or more virtual machines implemented in a virtual environment(s) hosted by the processing node(s) 56. As will be appreciated by one of ordinary skill in the art, additional signaling or communication between the processing node(s) 56 and the control system 38 (if present) or alternatively the radio unit(s) 46 (if present) is used in order to carry out at least some of the desired functions. Notably, in some embodiments, the control system 38 may not be included, in which case the radio unit(s) 46 (if present) communicates directly with the processing node(s) 56 via an appropriate network interface(s).

In some particular embodiments, higher layer functionality (e.g., layer 3 and up, and possibly some of layer 2 of the protocol stack) of the network node 36 may be implemented at the processing node(s) 56 as virtual components (i.e., implemented "in the cloud") whereas lower layer functionality (e.g., layer 1 and possibly some of layer 2 of the protocol stack) may be implemented in the radio unit(s) 46 and possibly the control system 38.

In some embodiments, a computer program including instructions which, when executed by the at least one processor 40, 60, causes the at least one processor 40, 60 to carry out the functionality of the network node 36 or a processing node 56 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 62).

The following acronyms are used throughout this disclosure.

| | |
|---|---|
| • 3GPP | Third Generation Partnership Project |
| • 5G | Fifth Generation |
| • ASIC | Application Specific Integrated Circuits |
| • BSR | Buffer Status Report |

Embodiment 3: The method of embodiment 1 wherein determining the additional scheduling information comprises interpreting the ESR using a predefined mapping.
Embodiment 4: The method of embodiment 3 wherein interpreting the ESR using a predefined mapping comprises using at least one mapping table to map ESR values to the additional scheduling information.
Embodiment 5: The method of embodiment 3 further comprising: detecting (step 200) a trigger condition; and changing (step 202) the predefined mapping to a different mapping in response to detecting the trigger condition.
Embodiment 6: The method of embodiment 5 wherein detecting the trigger condition comprises at least one from the group of: determining that the UE has new traffic or a new service; determining that a capability of the UE has changed; determining that the UE has experienced a handover; determining that the UE has released a radio bearer; determining that at least some network traffic fails to meet predefined requirements; and determining that network load does not meet a predefined threshold.
Embodiment 7: The method of embodiment 5 wherein detecting the trigger condition comprises receiving, from the UE, information identifying a mapping requested by the UE.
Embodiment 8: The method of embodiment 5 wherein changing the predefined mapping comprises sending to the UE information that identifies the different mapping, already provisioned in the UE, to be used.
Embodiment 9: The method of embodiment 5 wherein changing the predefined mapping comprises sending to the UE the different mapping to be used.
Embodiment 10: The method of embodiment 5 wherein changing the predefined mapping to a different mapping comprises using at least one from the group of: Radio Resource Control, RRC, or other Layer 3, L3, signaling; Media Access Control, MAC, or other Layer 2, L2, signaling; and Layer 1, L1, signaling.
Embodiment 11: The method of embodiment 3 wherein the predefined mapping for the UE is different from the predefined mapping for a second UE.
Embodiment 12: A method of operation of a User Equipment, UE, the method comprising: determining (step 300) that data is available for uplink transmission; determining (step 302) additional scheduling information associated with the data available for uplink transmission; determining (step 304) an Enhanced Scheduling Request, ESR, value that conveys the availability of data and the additional scheduling information; and transmitting (step 306), to a scheduling node, a Scheduling Request, SR, the SR comprising the ESR value.
Embodiment 13: The method of embodiment 12 wherein the additional scheduling information comprises at least one from the group of: a priority level; a logical channel or logical channel group; one or more TTI durations; one or more numerologies; a transmit buffer size; a transmit data amount; a transmit data type; and a transmit packet size.
Embodiment 14: The method of embodiment 12 wherein determining the ESR value that conveys the availability of data and the additional scheduling information comprises determining the ESR value using a predefined mapping.
Embodiment 15: The method of embodiment 14 wherein determining the ESR using a predefined mapping comprises using at least one mapping table to map the additional scheduling information to ESR values.
Embodiment 16: The method of embodiment 14 further comprising: detecting (step 400) a trigger condition; and requesting (step 402), in response to the detecting trigger condition, to change the predefined mapping to a different mapping.
Embodiment 17: The method of embodiment 16 wherein detecting the trigger condition comprises at least one from the group of: determining that the UE has new traffic or a new service; determining that a capability of the UE has changed; determining that the UE has experienced a handover; determining that the UE has released a radio bearer; determining that at least some network traffic fails to meet predefined requirements; and determining that network load does not meet a predefined threshold.
Embodiment 18: The method of embodiment 16 wherein requesting to change the predefined mapping to a different mapping comprises sending, to a network node, information identifying the different mapping.
Embodiment 19: The method of embodiment 16 wherein requesting to change the predefined mapping comprises sending to the network node information that identifies the different mapping, already provisioned in the network node, to be used.
Embodiment 20: The method of embodiment 16 wherein changing the predefined mapping comprises sending to the network node the different mapping to be used.
Embodiment 21: The method of embodiment 16 wherein requesting to change the predefined mapping to a different mapping comprises using at least one from the group of: Radio Resource Control, RRC, or other L3 signaling; Medium Access Control, MAC, or other L2 signaling; and L1 signaling.
Embodiment 22: A node (14, 36) for using ESRs for conveying availability of data and additional scheduling information, the node (14, 36) adapted to operate according to the method of any one of embodiments 1 to 21.
Embodiment 23: A node (14, 36) for using ESRs for conveying availability of data and additional scheduling information, comprising: at least one processor (22, 40, 60); and memory (24, 42, 62) comprising instructions executable by the at least one processor (22, 40, 60) whereby the node (14, 36) is adapted to operate according to the method of any one of embodiments 1 to 21.
Embodiment 24: A node (14, 36) for using ESRs for conveying availability of data and additional scheduling information, comprising: one or more modules (34, 54) whereby the node (14, 36) is adapted to operate according to the method of any of embodiments 1 to 21.

The following acronyms are used throughout this disclosure.

| | |
|---|---|
| • 3GPP | Third Generation Partnership Project |
| • 5G | Fifth Generation |
| • ASIC | Application Specific Integrated Circuits |
| • BSR | Buffer Status Report |
| • CFI | Control Format Indicator |
| • CPU | Central Processing Unit |
| • D-SR | Dedicated Scheduling Request |
| • DFT | Discrete Fourier Transform |
| • DRB | Data Radio Bearer |
| • DSP | Digital Signal Processor |
| • eNB | Enhanced or Evolved Node B |
| • ePDCCH | Enhanced Physical Downlink Control Channel |
| • ESR | Enhanced Scheduling Request |
| • FPGA | Field Programmable Gate Arrays |
| • FTP | File Transfer Protocol |
| • GHz | Gigahertz |
| • gNB | New Radio Base Station |
| • HARQ | Hybrid Automatic Repeat Request |
| • L1 | Layer 1 |
| • L2 | Layer 2 |
| • L3 | Layer 3 |
| • LCG | Logical Channel Group |
| • LCH | Logical Channel |
| • LTE | Long Term Evolution |
| • M2M | Machine-to-Machine |
| • MAC | Medium Access Control |
| • MAC-CE | Medium Access Control Control Element |
| • MHz | Megahertz |
| • MME | Mobility Management Entity |
| • MTC | Machine Type Communication |
| • NR | New Radio |
| • OFDM | Orthogonal Frequency Division Multiplexing |
| • P-GW | Packet Data Network Gateway |
| • PDCCH | Physical Downlink Control Channel |
| • PRB | Physical Resource Block |
| • PUCCH | Physical Uplink Control Channel |
| • PUSCH | Physical Uplink Shared Channel |
| • QCI | Quality of Service Class Identifier |
| • QoS | Quality of Service |
| • QPSK | Quadrature Phase Shift Keying |
| • RA-SR | Random Access Scheduling Request |
| • RACH | Random Access Channel |
| • RB | Resource Blocks |
| • RE | Resource Element |
| • Rel | Release |
| • RLC | Radio Link Control |
| • RRC | Radio Resource Control |
| • SCEF | Service Capability Exposure Function |
| • SR | Scheduling Request |
| • SRB | Signaling Radio Bearer |
| • TTI | Transmit Time Interval |
| • UE | User Equipment |
| • UP | User Plane |
| • URLLC | Ultra-Reliable and Low Latency Communication |
| • VoIP | Voice Over Internet Protocol |
| • VRB | Virtual Resource Block |

Those skilled in the art will recognize improvements and modifications to the embodiments of the present disclosure. All such improvements and modifications are considered within the scope of the concepts disclosed herein.

## Claims

1. A method of operation of a network node (14,36), the method comprising:
receiving (step 100), from a User Equipment, UE, (12) an Enhanced Scheduling Request, ESR, for conveying availability of data and additional scheduling information;
determining (step 102) the additional scheduling information from the ESR, using a predefined mapping that maps time and/or frequency resources used for receiving the ESR to the additional scheduling information or using a predefined mapping that maps values of a plurality of bits of the received ESR to the additional scheduling information;
making (step 104) scheduling allocations based on the additional scheduling information;
detecting (step 200) a trigger condition, wherein detecting the trigger condition comprises determining that at least some network traffic fails to meet predefined requirements or determining that a network load does not meet a predefined threshold; and
changing (step 202) the predefined mapping to a different mapping in response to detecting the trigger condition.

2. The method of claim 1 wherein the additional scheduling information comprises a logical channel or logical channel group.

3. The method of claim 1 wherein the additional scheduling information comprises at least one from the group of:
a priority level;
one or more Transmit Time Interval, TTI, durations;
one or more numerologies;
a transmit buffer size;
a transmit data amount;
a transmit data type; and
a transmit packet size.

4. The method of any of claims 1 wherein the predefined mapping for the UE (12) is different from the predefined mapping for a second UE.

5. A method of operation of a User Equipment, UE, (12) the method comprising:
determining (step 300) that data is available for uplink transmission;
determining (step 302) additional scheduling information associated with the data available for uplink transmission;
determining (step 304) an Enhanced Scheduling Request, ESR, that conveys an availability of data and the additional scheduling information by using a predefined mapping to determine a time and/or frequency resource to be used for transmitting the ESR or by, when the ESR comprises a plurality of bits, using a predefined mapping to determine values for the plurality of bits of the ESR to be transmitted;
transmitting (step 306), to a network node (14,36), the ESR;
**characterized in that** the method further comprises:
detecting (step 400) a trigger condition, wherein detecting the trigger condition comprises determining that at least some network traffic fails to meet predefined requirements or determining that a network load does not meet a predefined threshold; and
requesting (step 402), in response to detecting the trigger condition, to change the predefined mapping to a different mapping.

6. The method of claim 5 wherein the additional scheduling information comprises a logical channel or logical channel group.

7. The method of claim 5 wherein the additional scheduling information comprises at least one from the group of:
a priority level;
one or more Transmit Time Interval, TTI, durations;
one or more numerologies;
a transmit buffer size;
a transmit data amount;
a transmit data type; and
a transmit packet size.

8. The method of any of claims 5 - 7 wherein the predefined mapping for the UE (12) is different from the predefined mapping for a second UE.

9. A network node (14,36) for using Enhanced Scheduling Requests, ESRs, for conveying availability of data and additional scheduling information, the network node (14,36) adapted to:
receive (step 100), from a User Equipment, UE, (12) an ESR for conveying availability of data and additional scheduling information;
determine (step 102) the additional scheduling information from the ESR, using a predefined mapping that maps time and/or frequency resources used for receiving the ESR to the additional scheduling information or using a predefined mapping that maps values of a plurality of bits of the received ESR to the additional scheduling information;
make (step 104) scheduling allocations based on the additional scheduling information;
**characterized in that** the network node is further adapted to:
detect (step 200) a trigger condition, wherein detect the trigger condition comprises determine that at least some network traffic fails to meet predefined requirements or determine that a network load does not meet a predefined threshold; and
change (step 202) the predefined mapping to a different mapping in response to detecting the trigger condition.

10. The network node (14,36) of claim 9 wherein the additional scheduling information comprises a logical channel or logical channel group.

11. A User Equipment, UE, (12) for using Enhanced Scheduling Requests, ESRs, for conveying availability of data and additional scheduling information, the UE (12) adapted to:
determine (step 300) that data is available for uplink transmission;
determine (step 302) additional scheduling information associated with the data available for uplink transmission;
determine (step 304) an ESR that conveys an availability of data and the additional scheduling information by using a predefined mapping to determine a time and/or frequency resource to be used for transmitting the ESR or by, when the ESR comprises a plurality of bits, using a predefined mapping to determine values for the plurality of bits of the ESR to be transmitted;
transmit (step 306), to a network node (14,36), the ESR;
**characterized in that** the UE is further adapted to:
detect (step 400) a trigger condition, wherein detect the trigger condition comprises determine that at least some network traffic fails to meet predefined requirements or determine that a network load does not meet a predefined threshold; and
request (step 402), in response to the detecting the trigger condition, to change the predefined mapping to a different mapping.

12. A non-transitory computer readable medium storing software instructions that when executed by one or more processors (40,60) of a network node (14,36) cause the network node (14,36) to perform the method of any one of claims 1 - 4.

13. A computer program comprising instructions which, when executed by at least one processor (40,60), cause the at least one processor (40,60) to carry out the method of any one of claims 1 - 4.

14. A non-transitory computer readable medium storing software instructions that when executed by one or more processors (22) of a User Equipment, UE, (12) cause the UE (12) to perform the method of any one of claims 5 - 8.

15. A computer program comprising instructions which, when executed by at least one processor (22), cause the at least one processor (22) to carry out the method of any one of claims 5 - 8.

## Patentansprüche

1. Verfahren des Betriebs eines Netzwerkknotens (14, 36), wobei das Verfahren Folgendes umfasst:
Empfangen (Schritt 100) einer erweiterten Scheduling-Anforderung (Enhanced Scheduling Request, ESR) von einem Benutzergerät (12) für das Übermitteln der Datenverfügbarkeit und zusätzlicher Scheduling-Informationen;
Bestimmen (Schritt 102) der zusätzlichen Scheduling-Informationen von der ESR unter Verwendung einer vordefinierten Zuordnung, die Zeit- und/oder Frequenzressourcen, die für den Empfang der ESR verwendet werden, den zusätzlichen Scheduling-Informationen zuordnet, oder unter Verwendung einer vordefinierten Zuordnung, die Werte einer Vielzahl von Bits der empfangenen ESR den zusätzlichen Scheduling-Informationen zuordnet;
Vornehmen (Schritt 104) von Scheduling-Zuweisungen beruhend auf den zusätzlichen Scheduling-Informationen;
Erfassen (Schritt 200) einer Auslösebedingung, wobei das Erfassen der Auslösebedingung das Bestimmen umfasst, dass zumindest ein Teil des Netzwerkverkehrs nicht die vordefinierten Anforderungen erfüllt, oder das Bestimmen umfasst, dass eine Netzwerklast einen vordefinierten Schwellenwert nicht erfüllt; und
Ändern (Schritt 202) der vordefinierten Zuordnung in eine andere Zuordnung als Reaktion auf das Erfassen der Auslösebedingung.

2. Verfahren nach Anspruch 1, wobei die zusätzlichen Scheduling-Informationen einen logischen Kanal oder eine logische Kanalgruppe umfassen.

3. Verfahren nach Anspruch 1, wobei die zusätzlichen Scheduling-Informationen mindestens eines aus der folgenden Gruppe umfassen:
eine Prioritätsstufe;
eine oder mehrere Sendezeitintervall (TTI) -Dauern;
eine oder mehrere Numerologien;
eine Übertragungspuffergröße;
eine Übertragungsdatenmenge;
einen Übertragungsdatentyp; und
eine Übertragungspaketgröße.

4. Verfahren nach einem der Ansprüche 1, wobei sich die vordefinierte Zuordnung für das UE (12) von der vordefinierten Zuordnung für ein zweites UE unterscheidet.

5. Verfahren des Betriebs eines Benutzergeräts, UE, (12), wobei das Verfahren Folgendes umfasst:
Bestimmen (Schritt 300), dass Daten für die Uplink-Übertragung verfügbar sind;
Bestimmen (Schritt 302) zusätzlicher Scheduling-Informationen, die mit den für die Uplink-Übertragung verfügbaren Daten in Verbindung stehen;
Bestimmen (Schritt 304) einer erweiterten Scheduling-Anforderung (Enhanced Scheduling Request, ESR), die eine Datenverfügbarkeit und die zusätzlichen Scheduling-Informationen übermittelt, und zwar durch die Verwendung einer vordefinierten Zuordnung zum Bestimmen einer Zeit- und/oder Frequenzressource, die für die Übertragung der ESR verwendet werden soll, oder, wenn die ESR eine Vielzahl von Bits umfasst, durch die Verwendung einer vordefinierten Zuordnung zum Bestimmen von Werten für die Vielzahl von Bits der zu übertragenden ESR;
Übertragen (Schritt 306) der ESR an einen Netzwerkknoten (14, 36);
**dadurch gekennzeichnet, dass** das Verfahren ferner Folgendes umfasst:
Erfassen (Schritt 400) einer Auslösebedingung, wobei das Erfassen der Auslösebedingung das Bestimmen umfasst, dass zumindest ein Teil des Netzwerkverkehrs nicht die vordefinierten Anforderungen erfüllt, oder das Bestimmen umfasst, dass eine Netzwerklast einen vordefinierten Schwellenwert nicht erfüllt; und
Anfordern (Schritt 402), als Reaktion auf das Erfassen der Auslösebedingung, zum Ändern der vordefinierten Zuordnung in eine andere Zuordnung.

6. Verfahren nach Anspruch 5, wobei die zusätzlichen Scheduling-Informationen einen logischen Kanal oder eine logische Kanalgruppe umfassen.

7. Verfahren nach Anspruch 5, wobei die zusätzlichen Scheduling-Informationen zumindest eines aus der folgenden Gruppe umfassen:
eine Prioritätsstufe;
eine oder mehrere Sendezeitintervall (TTI) -Dauern;
eine oder mehrere Numerologien;
eine Übertragungspuffergröße;
eine Übertragungsdatenmenge;
einen Übertragungsdatentyp; und
eine Übertragungspaketgröße.

8. Verfahren nach einem der Ansprüche 5 bis 7, wobei sich die vordefinierte Zuordnung für das UE (12) von der vordefinierten Zuordnung für ein zweites UE unterscheidet.

9. Netzwerkknoten (14, 36) für die Verwendung von erweiterten Scheduling-Anforderungen (Enhanced Scheduling Request, ESR) für die Übermittlung von Datenverfügbarkeit und zusätzlicher Scheduling-Informationen, wobei der Netzwerkknoten (14, 36) angepasst ist zum:
Empfangen (Schritt 100) einer ESR von einem Benutzergerät, UE, (12) für das Übermitteln der Datenverfügbarkeit und zusätzlicher Scheduling-Informationen;
Bestimmen (Schritt 102) der zusätzlichen Scheduling-Informationen von der ESR unter Verwendung einer vordefinierten Zuordnung, die Zeit- und/oder Frequenzressourcen, die für den Empfang der ESR verwendet werden, den zusätzlichen Scheduling-Informationen zuordnet, oder unter Verwendung einer vordefinierten Zuordnung, die Werte einer Vielzahl von Bits der empfangenen ESR den zusätzlichen Scheduling-Informationen zuordnet;
Vornehmen (Schritt 104) von Scheduling-Zuweisungen beruhend auf den zusätzlichen Scheduling-Informationen;
**dadurch gekennzeichnet, dass** der Netzwerkknoten ferner angepasst ist zum:
Erfassen (Schritt 200) einer Auslösebedingung, wobei das Erfassen der Auslösebedingung das Bestimmen umfasst, dass zumindest ein Teil des Netzwerkverkehrs nicht die vordefinierten Anforderungen erfüllt, oder das Bestimmen umfasst, dass eine Netzwerklast einen vordefinierten Schwellenwert nicht erfüllt; und
Ändern (Schritt 202) der vordefinierten Zuordnung in eine andere Zuordnung als Reaktion auf das Erfassen der Auslösebedingung.

10. Netzwerkknoten (14, 36) nach Anspruch 9, wobei die zusätzlichen Scheduling-Informationen einen logischen Kanal oder eine logische Kanalgruppe umfassen.

11. Benutzergerät, UE, (12) für die Verwendung von erweiterten Scheduling-Anforderungen (Enhanced Scheduling Request, ESR) für die Übermittlung der Datenverfügbarkeit und zusätzlicher Scheduling-Informationen, wobei das UE (12) angepasst ist zum:
Bestimmen (Schritt 300), dass Daten für die Uplink-Übertragung verfügbar sind;
Bestimmen (Schritt 302) zusätzlicher Scheduling-Informationen, die mit den für die Uplink-Übertragung verfügbaren Daten verbunden sind;
Bestimmen (Schritt 304) einer ESR, die eine Datenverfügbarkeit und die zusätzlichen Scheduling-Informationen übermittelt, und zwar durch die Verwendung einer vordefinierten Zuordnung zum Bestimmen einer Zeit- und/oder Frequenzressource, die für die Übertragung der ESR verwendet werden soll, oder, wenn die ESR eine Vielzahl von Bits umfasst, durch die Verwendung einer vordefinierten Zuordnung zum Bestimmen von Werten für die Vielzahl von Bits der zu übertragenden ESR;
Übertragen (Schritt 306) der ESR an einen Netzwerkknoten (14, 36);
**dadurch gekennzeichnet, dass** das UE ferner angepasst ist zum:
Erfassen (Schritt 400) einer Auslösebedingung, wobei das Erfassen der Auslösebedingung das Bestimmen umfasst, dass zumindest ein Teil des Netzwerkverkehrs nicht die vordefinierten Anforderungen erfüllt, oder das Bestimmen umfasst, dass eine Netzwerklast einen vordefinierten Schwellenwert nicht erfüllt; und
Anfordern (Schritt 402), als Reaktion auf das Erfassen der Auslösebedingung, des Änderns der vordefinierten Zuordnung in eine andere Zuordnung.

12. Nicht-transitorisches computerlesbares Medium, das Softwarebefehle speichert, die, wenn sie von einem oder mehreren Prozessoren (40, 60) eines Netzwerkknotens (14, 36) ausgeführt werden, den Netzwerkknoten (14, 36) dazu veranlassen, das Verfahren nach einem der Ansprüche 1 bis 4 auszuführen.

13. Computerprogramm, umfassend Befehle, die, wenn sie von mindestens einem Prozessor (40, 60) ausgeführt werden, den mindestens einen Prozessor (40, 60) dazu veranlassen, das Verfahren nach einem der Ansprüche 1 - 4 auszuführen.

14. Nicht-transitorisches computerlesbares Medium, das Softwarebefehle speichert, die, wenn sie von einem oder mehreren Prozessoren (22) eines Benutzergeräts, UE, (12) ausgeführt werden, das UE (12) dazu veranlassen, das Verfahren nach einem der Ansprüche 5 - 8 auszuführen.

15. Computerprogramm, umfassend Anweisungen, die, wenn sie von mindestens einem Prozessor (22) ausgeführt werden, den mindestens einen Prozessor (22) dazu veranlassen, das Verfahren nach einem der Ansprüche 5 bis 8 auszuführen.

## Revendications

1. Procédé de fonctionnement d'un nœud de réseau (14, 36), le procédé comprenant :
la réception (étape 100), à partir d'un équipement utilisateur, UE, (12) une demande de planification améliorée, ESR, pour transmettre la disponibilité de données et des informations de planification supplémentaires ;
la détermination (étape 102) des informations de planification supplémentaires à partir de l'ESR, en utilisant un mappage prédéfini qui mappe les ressources de temps et / ou de fréquence utilisées pour recevoir l'ESR aux informations de planification supplémentaires ou en utilisant un mappage prédéfini qui mappe des valeurs d'une pluralité de bits de l'ESR reçue aux informations de planification supplémentaires ;
l'exécution (étape 104) d'attributions de planification sur la base des informations de planification supplémentaires ;
la détection (étape 200) d'une condition de déclenchement, dans lequel la détection de la condition de déclenchement comprend la détermination qu'au moins une partie du trafic réseau ne satisfait pas aux exigences prédéfinies ou la détermination qu'une charge réseau ne satisfait pas un seuil prédéfini ; et
le changement (étape 202) du mappage prédéfini en un mappage différent en réponse à la détection de la condition de déclenchement.

2. Procédé selon la revendication 1, dans lequel les informations de planification supplémentaires comprennent un canal logique ou un groupe de canaux logiques.

3. Procédé selon la revendication 1, dans lequel les informations de planification supplémentaires comprennent au moins un élément parmi le groupe consistant en :
un niveau de priorité ;
une ou plusieurs durées d'intervalle de temps de transmission, TTI ;
une ou plusieurs numérologies ;
une taille de tampon de transmission ;
une quantité de données de transmission ;
un type de données de transmission ; et
une taille de paquet de transmission.

4. Procédé selon l'une quelconque des revendications 1, dans lequel le mappage prédéfini pour l'UE (12) est différent du mappage prédéfini pour un second UE.

5. Procédé de fonctionnement d'un équipement utilisateur, UE, (12) le procédé comprenant :
la détermination (étape 300) que des données sont disponibles pour une transmission en liaison montante ;
la détermination (étape 302) d'informations de planification supplémentaires associées aux données disponibles pour une transmission en liaison montante ;
la détermination (étape 304) d'une demande de planification améliorée, ESR, qui transmet une disponibilité de données et les informations de planification supplémentaires en utilisant un mappage prédéfini pour déterminer une ressource de temps et / ou de fréquence à utiliser pour transmettre l'ESR ou, quand l'ESR comprend une pluralité de bits, en utilisant un mappage prédéfini pour déterminer des valeurs pour la pluralité de bits de l'ESR à transmettre ;
la transmission (étape 306), à un nœud de réseau (14, 36), de l'ESR ;
**caractérisé en ce que** le procédé comprend en outre :
la détection (étape 400) d'une condition de déclenchement, dans lequel la détection de la condition de déclenchement comprend la détermination qu'au moins une partie du trafic réseau ne satisfait pas aux exigences prédéfinies ou la détermination qu'une charge réseau ne satisfait pas un seuil prédéfini ; et
la demande (étape 402), en réponse à la détection de la condition de déclenchement, de changer le mappage prédéfini en un mappage différent.

6. Procédé selon la revendication 5, dans lequel les informations de planification supplémentaires comprennent un canal logique ou un groupe de canaux logiques.

7. Procédé selon la revendication 5, dans lequel les informations de planification supplémentaires comprennent au moins un élément parmi le groupe de :
un niveau de priorité ;
une ou plusieurs durées d'intervalle de temps de transmission, TTI ;
une ou plusieurs numérologies ;
une taille de tampon de transmission ;
une quantité de données de transmission ;
un type de données de transmission ; et
une taille de paquet de transmission.

8. Procédé selon l'une quelconque des revendications 5 à 7, dans lequel le mappage prédéfini pour l'UE (12) est différent du mappage prédéfini pour un second UE.

9. Nœud de réseau (14, 36) pour utiliser des demandes de planification améliorée, ESR, pour transmettre la disponibilité de données et d'informations de planification supplémentaires, le nœud de réseau (14, 36) étant adapté pour :
recevoir (étape 100), à partir d'un équipement utilisateur, UE, (12) une ESR pour transmettre la disponibilité de données et des informations de planification supplémentaires ;
déterminer (étape 102) les informations de planification supplémentaires à partir de l'ESR, en utilisant un mappage prédéfini qui mappe les ressources de temps et / ou de fréquence utilisées pour recevoir l'ESR aux informations de planification supplémentaires ou en utilisant un mappage prédéfini qui mappe les valeurs d'une pluralité de bits de l'ESR reçue aux informations de planification supplémentaires ;
effectuer (étape 104) des attributions de planification sur la base des informations de planification supplémentaires ; **caractérisé en ce que** le nœud de réseau est en outre adapté pour :
détecter (étape 200) une condition de déclenchement, dans lequel la détection de la condition de déclenchement comprend la détermination qu'au moins une partie du trafic réseau ne satisfait pas aux exigences prédéfinies ou la détermination qu'une charge de réseau ne satisfait pas un seuil prédéfini ; et
changer (étape 202) le mappage prédéfini en un mappage différent en réponse à la détection de la condition de déclenchement.

10. Nœud de réseau (14, 36) selon la revendication 9, dans lequel les informations de planification supplémentaires comprennent un canal logique ou un groupe de canaux logiques.

11. Equipement utilisateur, UE, (12) pour utiliser des demandes de planification améliorée, ESR, pour transmettre la disponibilité de données et des informations de planification supplémentaires, l'UE (12) étant adapté pour :
déterminer (étape 300) que des données sont disponibles pour une transmission en liaison montante ;
déterminer (étape 302) des informations de planification supplémentaires associées aux données disponibles pour une transmission en liaison montante ;
déterminer (étape 304) une ESR qui transmet une disponibilité de données et les informations de planification supplémentaires en utilisant un mappage prédéfini pour déterminer une ressource de temps et / ou de fréquence à utiliser pour transmettre l'ESR ou, lorsque l'ESR comprend une pluralité de bits, en utilisant un mappage prédéfini pour déterminer des valeurs pour la pluralité de bits de l'ESR à transmettre ;
transmettre (étape 306), à un nœud de réseau (14, 36), l'ESR ;
**caractérisé en ce que** l'UE est en outre adapté pour :
détecter (étape 400) une condition de déclenchement, dans lequel la détection de la condition de déclenchement comprend la détermination qu'au moins une partie du trafic réseau ne satisfait pas aux exigences prédéfinies ou la détermination qu'une charge réseau ne satisfait pas un seuil prédéfini ; et
demander (étape 402), en réponse à la détection de la condition de déclenchement, de changer le mappage prédéfini en un mappage différent.

12. Support lisible par ordinateur non transitoire stockant des instructions logicielles qui, lorsqu'elles sont exécutées par un ou plusieurs processeurs (40, 60) d'un nœud de réseau (14, 36), amènent le nœud de réseau (14, 36) à exécuter le procédé de l'une quelconque des revendications 1 à 4.

13. Programme informatique comprenant des instructions qui, lorsqu'elles sont exécutées par au moins un processeur (40, 60), amènent l'au moins un processeur (40, 60) à exécuter le procédé de l'une quelconque des revendications 1 à 4.

14. Support lisible par ordinateur non transitoire stockant des instructions logicielles qui, lorsqu'elles sont exécutées par un ou plusieurs processeurs (22) d'un équipement utilisateur, UE, (12) amènent l'UE (12) à exécuter le procédé de l'une quelconque des revendications 5 à 8.

15. Programme informatique comprenant des instructions qui, lorsqu'elles sont exécutées par au moins un processeur (22), amènent l'au moins un processeur (22) à exécuter le procédé de l'une quelconque des revendications 5 à 8.
